# EUROPEAN PATENT APPLICATION

(11) **EP 1 801 609 A1**
(43) Date of publication of application: **27.06.2007**
(21) Application number: 05112892.4
(22) Date of filing: 23.12.2005
(51) Int. Cl.: G01S 1/04

(54) **Method and apparatus for time synchronisation**

(71) Applicant: TELEFONAKTIEBOLAGET LM ERICSSON (publ), 164 83 Stockholm (SE)
(72) Inventor: Lethbridge, Simon, Thatcham Thatcham RG19 3XW (GB)
(74) Representative: Asketorp, Göran

(57) **Abstract**

A method and apparatus for time synchronisation of a satellite positioning system, SPS, module (120) and a real-time clock, RTC, module (130) of a communication apparatus (100), wherein a request for time is sent to a processor module (110) of the apparatus, which sends a request for time to the RTC (130), and in response to the request, sending a synchronisation pulse from the RTC module (130) directly to the SPS module (120).

## Description

### Technical field

The described subject matter relates to a method and apparatus for time synchronisation in a communication apparatus, and more particularly to a method and apparatus for time synchronisation of a satellite positioning system (SPS) module and a real-time clock (RTC) module of a portable communication apparatus.

### Background

Satellite positioning systems, such as the Global Positioning System (GPS), are world wide navigation and positioning resources for both military and civilian use.

A GPS device uses signals transmitted by satellites that travel the earth's orbit to determine a current position of a GPS device or its carrier. The system was developed and is administered by the US Department of Defence, and is now used for car navigation and other purposes. A mobile phone with GPS functions allows you to not only determine your own position, but also to notify others about your present location by sending messages.

It has been difficult to implement location-based services that use GPS in mobile phones. A GPS module of a mobile phone can take several minutes to receive satellite navigation data and compute an accurate position from a cold start. This is however too long in many practical situations. In a case where the mobile phone is used for an emergency call and to determine the location of the phone, every second may be decisive.

Mobile phones have a real time clock (RTC) module that maintains the current time of day which can be used to provide information on the current time. The main purpose of the RTC module is to display current time to the user. Although the RTC module may or may not be sufficiently accurate for use in providing timing information to the GPS module of the mobile phone, the user can set the clock to any time. This time may not be accurate and even if it is, the time zone may be unknown. The time of the RTC module is transferred to the GPS module via software. This is however slow and introduces delays in the time presented to the GPS module.

US-B2-6 768 452 discloses a system and method for providing time to a satellite positioning system (SPS) receiver to assist it in satellite acquisition. An SPS receiver and communications processor may be packaged together into a single electronic device, such as an SPS enabled cellular telephone. The communications processor has a local real-time clock. The system also has a pulse and message generator (PMG) that may be configured to provide a timing pulse to the SPS receiver and provide a time message to the SPS receiver indicating the actual time that corresponds to the timing pulse. The PMG and the SPS receiver are connected via two signal lines. One of these lines can be a single line and is used to provide a timing pulse from the PMG to the SPS receiver. The timing pulse is used as a beacon to let the SPS receiver know that when it receives the timing pulse, the actual time is the time that is specified in a message provided by the PMG over a second signal line.

Moreover, the SPS receiver may include a built-in real-time clock to provide a reference clock signal to help maintain the accuracy of the real time clock in the communications processor.

However, the reference clock signals are always received by the PMG. The PMG may be a computer program executing on a processing element of a communications processor that can send certain values on the signal lines. It may also be a dedicated circuit that is used to generate the control signals or it may be a portion of a general purpose signal generator. Hence, the PMG will always cause delays.

### Summary

According to some embodiments, a method is provided for time synchronisation of a satellite positioning system module and a real-time clock module of a communication apparatus, wherein a request for time is sent from the satellite positioning system module to a processor module of the apparatus, which sends a request for time to the real-time clock module. The method is characterised by sending a first synchronisation pulse from the real-time clock module directly to the satellite positioning system module in response to the request.

According to some embodiments, a communication apparatus comprises a processor module, a satellite positioning system module connected to the processor module via an electrical interface, and a real-time clock module connected to the base band module via an electrical interface. The apparatus is characterised by a direct connection between the satellite positioning system module and the real-time clock module adapted for carrying synchronisation pulses between the satellite positioning system module and the real-time clock module.

Further embodiments are defined by the dependent claims.

### Brief Description of the Drawings

In order to explain the described subject matter in more detail, the advantages and features of one of the many conceivable embodiments will be described in detail below, reference being made to the accompanying drawings, in which
FIG 1 is a block diagram of a portable radio communication apparatus according to one embodiment;
FIG 2 is an improved RTC module according to one embodiment; and
FIG 3 is a flow diagram illustrating an embodiment which shows a method for controlling the operation of time synchronisation.

### Detailed Description

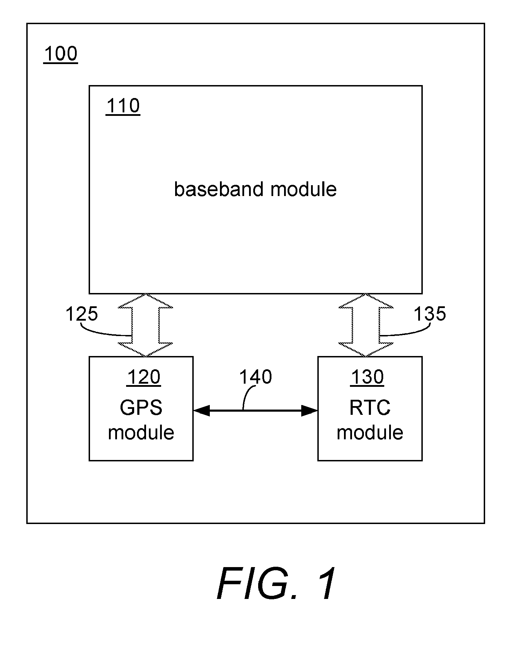

A portable radio communication apparatus 100 with an improved RTC and GPS module according to one embodiment is shown in FIG 1. Terminal or communication apparatuses include portable radio communication equipment, which may comprise equipment such as mobile telephones, pagers, communicators, i.e. electronic organizers, smart phones or the like.

The communication apparatus 100 includes, but is not limited to, a processor module 110, such as a base band module, with main components of a portable radio communication apparatus. The base band module 110 has components providing most of the functionality of the communication apparatus including a computer system with a computer processor and a computer memory connected to the processor. Moreover, the communication apparatus 100 has a satellite positioning system (SPS) module 120, for example a Global Positions System (GPS) module, connected to the base band module 110 via an electrical interface 125. In this embodiment the electrical interface may be an UART Interface. An improved real time clock (RTC) module 130 is also connected to the base band module 110 via an electrical interface 135. The electrical interface 135 may be an I2C interface.

Additionally, a connection 140 is provided between the GPS module 120 and the RTC module 130. The connection is used for synchronisation of the time of the GPS module with the time of the RTC module. According to this embodiment the connection is a single wire connection being low, which may be pulled high (or vice versa depending on the implementation) by either the GPS or the RTC module for sending a synchronisation pulse from the GPS module to the RTC module or vice versa, which is described later.

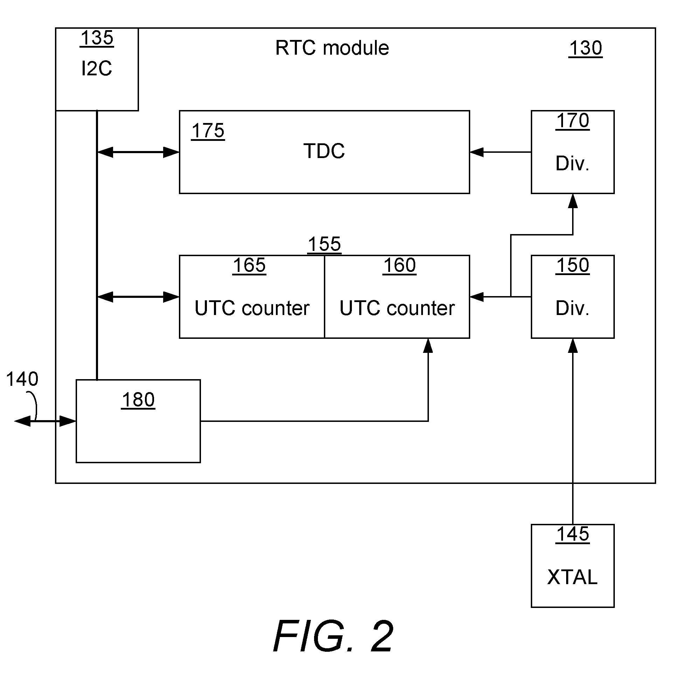

FIG 2 shows the improved RTC module 130 according to one embodiment. A standard clock module 145, which may be a 32 kHz crystal clock as in this embodiment, is connected to a clock input of a first divider 150 of the RTC module 130. The divider 150 may be configured to divide the clock signal to, e.g, a 128 Hz signal to be an input signal to a co-ordinated universal time (UTC) counter 155. The UTC counter 155 has a first part 160 that may be configured to, e.g., count 1/128ths of a second, and a second part 165 that may be configured to count whole seconds. This may allow the UTC counter to have a resolution of 1/128^{th} of a second. An output of the first divider 150 is connected to a second divider 170. The second divider 170 may be configured to provide a 1 Hz signal required for a 1 second resolution required for a time of day timer or counter 175. The UTC counter 155 and the time of day counter 175 may both be read and written/rewritten separately.

According to this embodiment of the RTC module 130, both parts 160 and 165 of the UTC counter are configured to be read. However, the RTC module may be configured to update the second part 165, when the RTC module is rewritten.

The RTC module 130 may be configured to provide timing information to the GPS module 120. Data is transferred from the RTC module 130 to the GPS module 120 through the base band module 110. The data transfer may involve the use of computer software, which may cause a delay in the data transfer from the RTC module 130 to the GPS module 120. The delay may be much longer than the resolution of the UTC counter, i.e. 1/128^{th} of a second in this embodiment. However, the influencing factor of the delay may be considerably reduced by the connection 140 between the RTC module 130 and the GPS module 120.

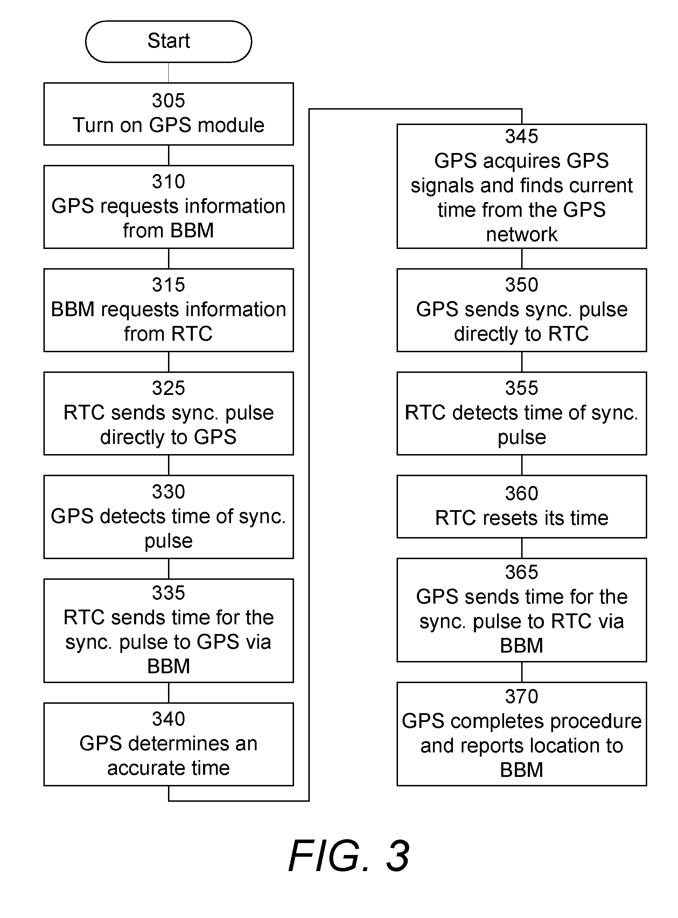

With reference to FIG 3, there is shown a flow diagram illustrating an embodiment of a method for controlling the operation of synchronising the time and date of the RTC module 130 and the GPS module 120.

When the GPS module 120 is turned on in step 305, it has no knowledge about the time and date. The GPS module requests information, including GPS time, in step 310 via the interface 125 from the base band module 110. The base band module requests the information from the RTC module via the interface 135 in step 315.

The RTC module 130 receives the request for information, i.e. a request to read the UTC counter 155, i.e. the first part 160 and/or the second part 165, from the base band module 110 in step 320. In response to the request, the RTC module 130 is configured to send a synchronisation pulse to the GPS module 120 via the direct connection 140 in step 325. The GPS module 120 may detect when the synchronisation pulse is received in step 330. A time and date for the synchronisation pulse may also be sent to the base band module 110 and is further transmitted to the GPS module 120 in step 335.

Due to the delay in the base band module 110, it is only an approximate time and date information sent from the RTC module 130 that is received in the GPS module 120. The GPS module may also receive other data or information from the base band module 110.

However, the GPS module 120 may then determine a time, or time and date, as accurate as the RTC may allow in step 340. It is determined based on the detected time, or time and date, when the synchronisation pulse was received and the time, or time and date, when the approximate time, or time and date, information is received, i.e. the delay, from the RTC module 130 via the base band module 110.

The GPS module may use the available time and date information to acquire GPS signals and to find the exact current time and date from the GPS network in step 345.

When a next one time period, one second boundary in this embodiment, is crossed for GPS time, a synchronisation pulse is sent to the RTC module 130 in step 350. The RTC module may detect when the synchronisation pulse is received in step 355 and a reset module 180 resets the time of the RTC module to the closest whole number of seconds in step 360. A time in seconds is transferred via the base band module 110 to the RTC module 130 in step 365.

Due to the delay in the base band module 110, it is only an approximate time and date information sent from the GPS module 120 that is received in the RTC module 130.

The RTC module may then determine an accurate time, or time and date, based on the time from the GPS module. The time is based on the detected time, or time and date, when the synchronisation pulse was received and the time and date when the approximate time and date information is received, i.e. the delay, from the GPS module 120 via the base band module 110. Thereby, the time of the time of day timer or counter 175 and/or the UTC counter 155 may be updated.

The GPS module completes its procedures and reports the location to the base band module 110 in step 370. This step may be performed before step 350 in an alternative embodiment.

Steps 350-360 may be repeated.

Although embodiments of the method and apparatus of the invention has been illustrated in the accompanying drawings and described in the foregoing detailed description, the disclosure is illustrative only and changes, modifications and substitutions may be made without departing from the scope of the invention as set forth and defined by the following claims.

In an alternative embodiment the described subject matter may be applied to other satellite positioning systems than the GPS system, such as DGPS etc. Moreover, other resolutions than 1/128^{th} of a second may be used in other embodiments.

Although the clock module 145 has been described as a 32 kHz crystal clock, it may be other types of clocks adapted to operate within various frequencies in other embodiments. Hence, the divider 150 may be configured to divide the clock signal to for example any of a 32 Hz to 1 kHz signal or even higher or lower depending on how accurate the clock module may be, to be an input signal to the UTC counter 155. The first part 160 of the UTC counter 155 thus may be configured to count 1/Xths of a second where X may be 32-1000 or another value suitable for the particular embodiment.

It should be apparent that the described subject matter provides an improved method and system for time synchronisation of a satellite positioning system, SPS, module and a real-time clock, RTC, module of a portable communication apparatus that fully satisfies the aims and advantages set forth above.

Hence, a single RTC module can be used for both "time of day" for the users of the communication apparatuses and UTC time for the GPS module.

Although the embodiment described with reference to the drawings comprises a computer apparatus of the base band module and processes performed in the computer apparatus for controlling the operation of the base band module, the RTC module 130 and the GPS module 120, at least parts of the invention also extends to programs on or in a carrier, adapted for putting the invention into practice. The program may be in the form of source code, object code a code suitable for use in the implementation of the method according to the invention. The carrier can be any entity or device capable of carrying the program. For example the carrier may be a record medium, computer memory, read-only memory or an electrical carrier signal.

## Claims

1. A method for time synchronisation of a satellite positioning system module (120) and a real-time clock module (130) of a communication apparatus (100), wherein a request for time is sent from the satellite positioning system module (120) to a processor module (110) of the apparatus, which sends a request for time to the real-time clock module (130), **characterised by**:
sending a first synchronisation pulse from the real-time clock module (130) directly to the satellite positioning system module (120) in response to the request.

2. The method according to claim 1, further comprising:
i) detecting the time in the satellite positioning system module (120) when the synchronisation pulse is received;
ii) sending the current time for the synchronisation pulse from the real-time clock module (130) to the satellite positioning system module (120) via the base band module (110); and
iii) determining an accurate time in the satellite positioning system module (120) based on the detected time when the synchronisation pulse was received and the received current time for the synchronisation pulse.

3. The method according to claim 2, further comprising:
using the accurate time of the satellite positioning system module (120) for acquiring satellite positioning signals comprising accurate current time.

4. The method according to any of the preceding claims further comprising:
sending a second synchronisation pulse from the satellite positioning system module (120) directly to the real-time clock module (130) when a timing boundary is crossed for a satellite positioning time.

5. The method according to claim 4, further comprising:
i) detecting when the synchronisation pulse is received in the real-time clock module (130);
ii) setting the time of the real-time clock module (130) to the closest whole number of seconds;
iii) transferring a time, in seconds, via the base band module (110) to the real-time clock module (130);
iv) determining an accurate time based on the detected time and when the synchronisation pulse was received and the time in seconds transferred from the base band module (110).

6. A communication apparatus (100) comprising a processor module (110), a satellite positioning system module (120) connected to the processor module (110) via an electrical interface (125), and a real-time clock module (130) connected to the processor module (110) via an electrical interface (135), **characterised by**
a direct connection (140) between the satellite positioning system module 120 and the real-time clock module (130) adapted for carrying synchronisation pulses between the satellite positioning system module (120) and the real-time clock module (130).

7. A communication apparatus (100) according to claim 6, wherein the universal time counter (155) comprises at least two separate counters for time of day.

8. A communication apparatus (100) according to any of the claims 6-7, wherein the connection is a single wire connection.

9. A communication apparatus (100) according to claim 8, wherein the satellite positioning system module and the real-time clock module are configured to change the state of the connection to be high or low for sending the synchronisation pulses.

10. A communication apparatus (100) according to any of the claims 6-9, wherein a standard clock module (145), is connected to a clock input of a first divider (150) of the real-time clock module (130), said first divider is configured to divide the clock signal to generate an output signal on an output of said divider (150) of a first frequency to be an input signal to a coordinated universal time (UTC) counter (155) connected to the divider (150), wherein said universal time counter (155) has a first part (160) configured to count a part of a time unit, and a second part (165) configured to count whole seconds, the output of said first divider (150) is connected to an input of a second divider (170), which is adapted to receive the output signal from the first divider (150), and the second divider (170) is configured to provide a signal of a frequency required for a resolution required for a time of day counter (175) connected to the output of said second divider (170).

11. A communication apparatus (100) according to claim 10, wherein the universal time counter (155) and the time of day counter (175) are configured to be read and written separately.

12. A communication apparatus (100) according to claim 10 or 11, wherein the first (160) and second (165) parts of the universal time counter (155) are configured to be read.

13. A communication apparatus (100) according to any of the claims 9-12, wherein the real-time clock module (130) is configured to update the second part (165) of the universal time counter (155), when the real-time clock module is written.

14. A communication apparatus (100) according to any of the claims 6-13, wherein the satellite positioning system module (120) is a global positioning system, GPS, module.
